# EUROPÄISCHE PATENTSCHRIFT

(11) **EP 3 140 874 B1**
(45) Veröffentlichungstag und Bekanntmachung des Hinweises auf die Patenterteilung: **21.09.2022**
(21) Anmeldenummer: 15723451.9
(22) Anmeldetag: 06.05.2015
(51) Int. Cl.: H01M 50/20, H01M 50/24, H01M 50/502, H01M 50/572

(54) **BATTERIEPACK UND VERFAHREN ZUR MONTAGE EINES BATTERIEPACKS**
BATTERY PACK AND METHOD FOR ASSEMBLING A BATTERY PACK
BATTERIE ET PROCÉDÉ DE MONTAGE D'UN BLOC DE BATTERIES

(30) Priorität: 08.05.2014 DE 102014106414; 21.10.2014 DE 102014115330
(43) Veröffentlichungstag der Anmeldung: 15.03.2017
(73) Patentinhaber: H-Tech AG, 9494 Schaan (LI)
(72) Erfinder: TSCHIGGFREI, Peter, A-6807 Tisis (AT); SKALA, Gerd, A-6820 Frastanz (AT)
(74) Vertreter: Ter Meer Steinmeister & Partner
(86) Internationale Anmeldenummer: PCT/EP2015/059900
(87) Internationale Veröffentlichungsnummer: WO 2015/169820

(56) Entgegenhaltungen:
- EP-A1- 2 482 362
- WO-A1-2014/038184
- US-A1- 2007 188 147
- US-A1- 2011 020 678

## Beschreibung

Die vorliegende Erfindung bezieht sich auf eine Vorrichtung zur Aufnahme von Batteriezellen, im Folgenden auch als Batteriepack bezeichnet, und auf ein Verfahren zur Montage oder Herstellung eines Batteriepacks.

Batteriepacks werden in vielen verschiedenen elektrisch betriebenen Geräten eingesetzt, insbesondere in Elektrofahrzeugen, in elektrisch angetriebenen Fahrrädern, in akkubetriebenen Werkzeugen, tragbaren Computern und Telefonen usw. In diesen Batteriepacks werden meist wiederaufladbare Zellen eingesetzt. Heutzutage werden in derartigen Batteriepacks wiederaufladbare Batteriezellen auf Lithiumbasis verwendet. Wiederaufladbare Batterien zeichnen sich dadurch aus, dass sie nach einem ersten Entladeprozess wieder erneut aufgeladen werden können. Dies erfordert jedoch eine entsprechende Beschaltung zur Überwachung des Lade- und Entladeprozesses, die beispielsweise durch ein Batteriemanagementsystem übernommen wird. Beim Anschluss der einzelnen Zellen innerhalb eines Batteriepacks ist eine zuverlässige elektrische Verbindung zwischen den Anschlussstrukturen des Batteriepacks und den elektrischen Kontakten der Batteriezelle unerlässlich. Dieser Kontakt muss sowohl während des Betriebs, d.h. unter entsprechenden mechanischen als auch thermischen und elektrischen Belastungen als auch über die gesamte Lebensdauer des elektrischen Gerätes zuverlässig arbeiten.

Weiter treten insbesondere bei großen Batteriepacks mit mehreren hundert Batteriezellen beim Laden und auch beim Entladen sehr große Ströme an den Anschlussbereichen des Batteriepacks auf. Wo große Ströme fließen, entsteht sehr viel Wärme, deren Übertragung auf die Batteriezellen vermieden werden muss, da Batteriezellen, insbesondere Lithiumionenzellen bei unkontrollierter Wärmezufuhr ausgasen können bzw. auch explodieren können. Daher werden im Stand der Technik verschiedenste Technologien eingesetzt, um eine Wärmeeinwirkung auf die Zellen während der Montage des Batteriepacks als auch während des Lade- und Entladeprozesses zu vermeiden. Für die Vermeidung eines Wärmestaus während des Lade- und Entladeprozesses werden bspw. zusätzliche Kühlungen eingesetzt. Es ist jedoch auch bekannt, die einzelnen Batteriezellen eines Batteriepacks so anzuordnen, dass sie ausreichend belüftet werden, sodass ein Entstehen von Wärme innerhalb des Batteriepacks oberhalb eines zulässigen Werts möglichst vermieden wird. Allerdings muss auch die Wärmeeinwirkung während des Montageprozesses insbesondere während des Verbindungsvorgangs berücksichtigt werden.

Das Befestigen von Anschlussstrukturen des Batteriepacks an den einzelnen elektrischen Anschlüssen der Zellen wird häufig durch Punktschweißen oder Löten vorgenommen. Dies führt lokal zu sehr hohen Wärmeeinwirkungen auf die einzelnen Zellen, ist jedoch erforderlich, um eine zuverlässige elektrische Verbindung herzustellen. Ein weiterer Aspekt bei der Konstruktion von Batteriepacks ist, dass von den teilweise mehreren hundert Batteriezellen innerhalb eines Batteriepacks während der Betriebsdauer des Batteriepacks einzelne Batteriezellen aufgrund von Inhomogenitäten innerhalb der Zellen ausfallen können, wobei der Ausfall häufig durch einen erniedrigten Innenwiderstand hervorgerufen wird und demzufolge zu einem erhöhten Stromfluss zu den Anschlussstrukturen des Batteriepacks führt. Dieser erhöhte Stromfluss kann zu einer unkontrollierten Wärmeentwicklung in der Zelle und auch bei den benachbarten Zellen führen, was zu einer Kettenreaktion führen kann, sodass das ganze Batteriepack unkontrollierbar ausgast bzw. explodiert. Um derartige Einflüsse zu vermeiden, ist ein Batteriepack erforderlich, welches einfach herstellbar ist und durch seine Konstruktion eines oder mehrere der oben benannten Probleme vermeidet.

EP 2 482 362 A1 offenbart einen Batterieblock mit einem Metallgehäuse mit einer Seitenfläche und einer Bodenfläche und einer Mehrzahl von Zellen, die in dem Metallgehäuse untergebracht sind, wobei jede Zelle eine erste Elektrode und eine zweite Elektrode umfasst, wobei die Zellen mit den ersten Elektroden in der gleichen Richtung ausgerichtet sind, wobei die ersten Elektroden mit einem Verbinder verbunden sind, der so angeordnet ist, dass er einer Öffnung des Metallgehäuses zugewandt ist, wobei die zweiten Elektroden mit der Bodenfläche des Metallgehäuses verbunden sind, wobei die Höhe der Seitenfläche des Metallgehäuses im Wesentlichen gleich der Höhe der Zellen ist, und wobei die Öffnung des Metallgehäuses fast vollständig mit dem Steckverbinder bedeckt ist.

WO 2014/038184 A1 offenbart ein Batteriemodul mit einer Vielzahl von in Reihe geschalteten Batterieblöcken. Jeder Batterieblock enthält eine Vielzahl von parallel geschalteten Batterien. Jeder Batterieblock enthält einen Halter, in dem die Batterien mit den in der gleichen Richtung orientierten Freigabeabschnitten untergebracht sind, eine über dem Halter vorgesehene Sammelschiene, die mit parallelen Elektroden der Batterien verbunden ist, einen Deckel, der über der Sammelschiene vorgesehen ist.

US 2011/020678 A1 offenbart ein Batteriesystem mit einem oberen und einem unteren Substrat zu Aufnahme der Batteriezellen, wobei auf außenliegenden Oberflächen der Substrate Verbindungsstrukturen aufliegen, die mit einer Anschlussklammer an den Kontakten der Batteriezellen befestigt sind.

US 2007/188147 A1 offenbart ein Batteriesystem mit einem oberen und einem unteren Substrat zu Aufnahme der Batteriezellen, wobei auf außenliegenden Oberflächen der Substrate Verbindungsstrukturen aufliegen, die mit einem Anschlussdraht an den Kontakten der Batteriezellen befestigt sind.

Aufgabe der Erfindung ist es deshalb, ein Batteriepack anzugeben, welches einfach herstellbar ist, eine ausreichende Wärmeabfuhr während der Montage und während des Betriebs des Batteriepacks, eine zuverlässige elektrische Verbindung zwischen den Anschlussstrukturen und den Anschlusskontakten der Batteriezellen bereitstellt, als auch den Ausfall einer einzelnen Batteriezelle verkraftet.

Die Aufgabe wird durch die Merkmale der unabhängigen Ansprüche gelöst.

Die Erfindung basiert auf der Idee, in einem Batteriepack eine Anschlussstruktur und entsprechende elektrische Verbindungen zu den Anschlusskontakten der Batteriezellen bereitzustellen, die einerseits beim Laden eine gleichmäßige Verteilung des Ladestroms erlauben und beim Entladen den hohen Stromfluss der vielen einzelnen Batteriezellen zuverlässig zu Anschlussbereichen befördern, ohne die einzelnen Batteriezellen übermäßig mit Wärme zu belasten. Darüber hinaus wird durch die erfindungsgemäße Verbindung zwischen den elektrischen Anschlusskontakten der Batteriezellen und der Anschlussstruktur sichergestellt, dass im Falle eines Fehlers oder Ausfalls einer einzelnen Batteriezelle und eines extrem hohen Stroms durch den Fehlerfall eine zuverlässige Entkopplung der einzelnen Batteriezellen sichergestellt wird.

Gemäß einer Lösung der obigen Aufgabe umfasst ein Batteriepack: wenigstens zwei Batteriezellen, wobei jede Batteriezelle einen positiven und einen negativen elektrischen Anschlusskontakt aufweist, wenigstens den elektrisch positiven Anschlusskontakten oder den elektrisch negativen Anschlusskontakten der Batteriezellen eine Anschlussstruktur zugeordnet ist, jede Batteriezelle über wenigstens ein Anschlusselement mit der Anschlussstruktur verbunden ist, ein Querschnitt des jeweiligen Anschlusselements an einen vorbestimmten Maximalstrom einer Batteriezelle angepasst ist.

Vorzugsweise ist das Anschlusselement an einer den Batteriezellen zugewandten Seite der Anschlussstruktur befestigt ist.

Jede Anschlussstruktur weist eine Stromfestigkeit auf, die der Summe der Einzelströme jeder angeschlossenen Batteriezelle entspricht.

Vorzugsweise kann den elektrisch positiven Anschlusskontakten der Batteriezellen eine erste Anschlussstruktur und den elektrisch negativen Anschlusskontakten der Batteriezellen eine zweite Anschlussstruktur zugeordnet sein, wobei die Anschlusselemente jeweils an den Seiten der Anschlussstrukturen befestigt sind, die den Batteriezellen zugewandt sind.

Vorzugsweise kann das Batteriepack weiter wenigstens eine Haltestruktur zur Aufnahme der wenigstens zwei Batteriezellen enthalten.

Vorzugsweise kann die Haltestruktur eine Fläche aufweisen, die zur Anschlussstruktur gerichtet ist, wobei die Fläche von Anschlussöffnungen durchbrochen ist.

Vorzugsweise kann die Anschlussstruktur im montierten Zustand auf der Fläche der Haltestruktur aufliegen und die Anschlusselemente können die Anschlussöffnung durchdringen.

Vorzugsweise können auf der Seite der positiven elektrischen Anschlusskontakte eine erste Haltestruktur und auf der Seite der negativen elektrischen Anschlusskontakte eine zweite Haltestruktur angeordnet sein.

Vorzugsweise kann an vorbestimmten Plätzen zwischen der ersten und zweiten Haltestruktur wenigstens ein Befestigungselement angeordnet sein, um die beiden Haltestrukturen mit den eingesetzten Batteriezellen zusammenzuhalten. Es können auch mehrere Befestigungselement vorhanden sein.

Alternativ oder zusätzlich können wenigstens ein oder mehrere weitere Befestigungselemente vorgesehen sein, um die beiden Anschlussstrukturen mit den die Batteriezellen aufnehmenden Haltestrukturen zusammenzuhalten.

Vorzugsweise kann das Befestigungselement aus elektrisch nicht leitendem Material ausgebildet sein oder von einem elektrisch isolierenden Material umgeben sein.

Gemäß einer anderen Lösung der obigen Aufgabe wird ein Verfahren zum Herstellen eines Batteriepacks angegeben, umfassend die Schritte: Einsetzen von wenigstens zwei Batteriezellen in eine Haltestruktur, Verbinden einer Anschlussstruktur mit jeweils einem Anschlusselement pro Batteriezelle auf einer ersten Seite der Anschlussstruktur, Auflegen der Anschlussstruktur mit den befestigten Anschlusselementen auf die Haltestruktur, wobei die Anschlusselemente an der ersten Seite der Anschlussstruktur befestigt sind, die den Batteriezellen zugewandt ist, Verbinden der Anschlusselemente, die mit der Anschlussstruktur verbunden sind, mit elektrischen Anschlusskontakten der Batteriezelle.

Durch das Anbringen der Anschlusselemente an der Seite der Anschlussstruktur, die im montierten Zustand zu den Batteriezellen gerichtet ist, d.h. die Anschlussstruktur wird nach dem Anbringen der Anschlusselemente umgedreht, sind die Verbindungsstellen den Haltestrukturen bzw. Batteriezellen zugewandt. Dies hat zwei entscheidende Vorteile. Somit sind die Verbindungsstellen einerseits gegen äußere, insbesondere mechanische Einflüsse geschützt und es können Beschädigungen vermieden werden. Andererseits müssen die Anschlusselemente weniger stark gebogen werden, da der Abstand zu den Anschlusskontakten um die Materialstärke der Anschlussstrukturen kleiner wird. Dies hat auch positive Einflüsse auf die Schweißverbindungen, sowohl an den Anschlussstrukturen als auch an den Anschlusskontakten, da auf die Anschlusselemente weniger Materialspannungen einwirken. Darüber hinaus wird die Handhabung beim Verbinden/Schweißen durch die weniger gebogenen Anschlusselemente verbessert.

Gemäß einer Lösung der obigen Aufgabe umfasst ein Batteriepack wenigstens zwei Batteriezellen. Jede Batteriezelle hat dabei einen elektrisch positiven und einen elektrischen negativen Anschlusskontakt. Den elektrisch positiven Anschlusskontakten der Batteriezellen ist eine erste Anschlussstruktur zugeordnet und den elektrisch negativen Anschlusskontakten der Batteriezellen ist eine zweite Anschlussstruktur zugeordnet.

Da die Batteriezellen innerhalb des Batteriepacks beim Laden einen Strom empfangen, der vom Batteriemanagementsystem oder vom Ladegerät gesteuert wird, und beim Entladen einen hohen Strom abgeben, der durch die Lastanforderung bestimmt wird, weist jede Anschlussstruktur eine Stromfestigkeit auf, die der Summe der Einzelströme der angeschlossenen Batteriezellen des Batteriepacks entspricht.

Die elektrische Verbindung zwischen der ersten Anschlussstruktur und den jeweiligen elektrisch positiven Anschlusskontakten der im Batteriepack enthaltenen Batteriezellen und zwischen der zweiten Anschlussstruktur und den jeweiligen elektrisch negativen Anschlusskontakten der im Batteriepack enthaltenen Batteriezellen wird jeweils durch ein Anschlusselement bereitgestellt. Dabei ist jeder der Anschlusskontakte jeder Batteriezelle entsprechend mit wenigstens einem Anschlusselement verbunden, wobei jedes Anschlusselement mit der zugeordneten Anschlussstruktur verbunden ist. D.h. die Stromfestigkeit der Anschlussstruktur ist wesentlich größer als die Stromfestigkeit des jeweiligen Anschlusselements.

Erfindungsgemäß ist der Querschnitt des Anschlusselements, welches die elektrische Verbindung zwischen dem elektrischen Anschluss der Batteriezelle und der Anschlussstruktur herstellt, an einen vorbestimmten Maximalstrom einer einzelnen Batteriezelle angepasst. Dadurch wird sichergestellt, dass beim Entladen nur ein maximal vordefinierter oder zulässiger Strom durch die Batteriezelle fließen kann, da bei einem höheren Strom, der insbesondere im Fehlerfall durch einen niedrigen Innenwiderstand der Batteriezelle auftreten kann, das Anschlusselement schmilzt und somit eine Entkopplung der betroffenen Batteriezelle aus dem Batteriepack bewirkt. Andererseits wirken die Anschlusselemente mit dem definierten Querschnitt während des Ladeprozesses als Strombegrenzungselement, sodass nur ein begrenzter Strom in die Batteriezelle fließen kann. Dadurch wird eine Gleichverteilung des Stroms oder ein Ausgleich des Stroms erreicht, der zu den Batteriezellen fließt. Es wird verhindert, dass Batteriezellen, die näher an der Stromzuführung liegen, schneller geladen werden oder einen höheren Strom empfangen als Batteriezellen, die von diesem Anschlussbereich weiter entfernt sind.

Vorzugsweise sind die im Batteriepack befindlichen Batteriezellen in einer Parallelschaltung verschaltet. Das heißt die jeweils positiven oder negativen Anschlusskontakte der Batteriezellen sind jeweils einer Anschlussstruktur zugeordnet. Dadurch wird erreicht, dass sich die elektrisch positiven Anschlusskontakte und die elektrisch negativen Anschlusskontakte jeweils auf einer Seite, beispielsweise der Ober- bzw. Unterseite des Batteriepacks befinden und der Lade- bzw. Entladestrom über eine erste Anschlussstruktur für die elektrisch positiven Anschlusskontakte und eine zweite Anschlussstruktur für die elektrisch negativen Anschlusskontakte zu bzw. abgeführt werden kann.

In einer weiteren Ausgestaltung ist wenigstens eine Haltestruktur zur Aufnahme der wenigstens zwei Batteriezellen vorgesehen. Mittels dieser Haltestruktur wird eine physikalische Fixierung der Batteriezellen erreicht. Über die Haltestruktur werden die Batteriezellen mechanisch fixiert, sodass an den Anschlusselementen bzw. Anschlussstrukturen möglichst geringe mechanische Haltekräfte wirken und diese nicht unter mechanischer Spannung stehen.

In einer besonderen Ausgestaltung sind die Batteriezellen als Rundzellen ausgebildet, die einen elektrisch positiven Anschlusskontakt auf einer ersten Stirnseite aufweisen und einen elektrisch negativen Anschlusskontakt auf der gegenüberliegenden Stirnseite aufweisen. Die Erfindung ist jedoch nicht auf derartige Rundzellen eingeschränkt. Es können ebenso Pouchzellen, als auch Flachzellen verwendet werden, die aus mehreren Rundzellen bestehen, wobei die elektrischen Anschlusskontakte der jeweils verwendeten Batteriezellen auch auf der gleichen Seite des Batteriepacks angeordnet sein können. Allerdings ergibt sich dann eine andere Anordnung der Anschlussstrukturen. Gegebenenfalls sind mehrere elektrisch voneinander getrennte Anschlussstrukturen auf einer Seite des Batteriepacks erforderlich.

In einer weiteren besonderen Ausgestaltung ist eine erste und eine zweite Haltestruktur vorgesehen, die jeweils auf gegenüberliegenden Stirnseiten der Batteriezellen angeordnet sind, sodass jeweils die gegenüberliegenden Stirnseiten der Batteriezellen mit den entsprechenden elektrisch positiven und elektrisch negativen Anschlusskontakten in den beiden Haltestrukturen aufgenommen sind. Dazu weist die Haltestruktur vorzugsweise Aufnahmeöffnungen auf, die zur Aufnahme wenigstens eines Teils der äußeren Form jeder Batteriezelle des Batteriepacks vorgesehen sind. Durch diese Aufnahmeöffnung kann die Batteriezelle während des Montageprozesses in der Haltestruktur aufgenommen werden und wird dort ausreichend gut fixiert, sodass sie ihre Position nicht mehr verändern kann. Während der Befestigung der Anschlusselemente und der Anschlussstrukturen lässt sich die Position der elektrisch positiven und elektrisch negativen Anschlusskontakte somit nicht mehr verändern. Mittels der Ausgestaltung der Haltestruktur ist es ebenso möglich einen Abstand zwischen den einzelnen Batteriezellen zu definieren, in dem ein Abstand zwischen den Aufnahmeöffnungen so gewählt oder ausgebildet wird, dass eine ausreichende Belüftung zwischen den einzelnen Batteriezellen des Batteriepacks möglich ist. Die Aufnahmeöffnungen der ersten und zweiten Haltestrukturen weisen dazu jeweils eine vorbestimmte Tiefe auf, sodass die jeweiligen Batteriezellen dort ausreichend sicher eingesetzt werden können. Dabei ist die Aufnahmeöffnung so ausgestaltet, dass die Batteriezellen nicht herausfallen können. Durch die Aufnahmeöffnung wird somit eine Klemmverbindung bereitgestellt.

Weiter weist jede der Haltestrukturen mehrere Anschlussöffhungen auf, wobei über bzw. durch die Anschlussöffnungen hindurch eine Kontaktierung der elektrischen Anschlusskontakte der Batteriezellen erfolgt. Dabei ist jede Anschlussöffnung der Haltestruktur einer Aufnahmeöffhung zugeordnet. Das heißt, das Anschlusselement wird durch die Anschlussöffhung zur Aufnahmeöffnung geführt und somit an den elektrischen Anschlusskontakt der Batteriezellen herangeführt. Dazu steht die jeweilige Anschlussöffnung mit der entsprechenden Aufnahmeöffhung in Verbindung. Zwischen der Anschlussöffnung und der Aufnahmeöffnung existiert somit ein Durchgangsloch. Um ein Herausfallen bzw. ein Herausrutschen der Batteriezellen aus der Aufnahmeöffnung in Richtung Anschlussöffnung zu verhindern, ist die Anschlussöffhung kleiner als die Aufnahmeöffnung.

Darüber hinaus wird durch die kleinere Anschlussöffnung, die nach außen gerichtet ist, gleichzeitig ein mechanischer Schutz der Anschlussseite bzw. des elektrischen Anschlusses der Batteriezelle bereitgestellt, da durch wenigstens einen Vorsprung bzw. einen umlaufenden Rand der Aufnahmeöffnung ein Teil der Stirnseite der Batteriezellen abgedeckt wird und somit eine mechanische Beschädigung des elektrischen Anschlusses bzw. der Isolation der Zelle verhindert werden kann. Über die Stärke des Randes oder Vorsprungs in der Aufnahmeöffnung lässt sich ein Abstand zwischen Aufnahmeöffnung und Anschlussöffnung einstellen. Je größer dieser Abstand ist, desto höher ist die mechanische als auch thermische Sicherung des elektrischen Anschlusskontaktes der einzelnen Batteriezelle.

Wie oben bereits dargestellt, weist jede Haltestruktur Aufnahmeöffnungen und Anschlussöffnungen auf. Die Anschlussöffnungen sind an einer Anschlussseite der Haltestruktur angeordnet, wobei die Aufnahmeöffnungen an einer Aufnahmeseite der Haltestruktur angeordnet sind. Die Aufnahmeseite mit den Aufnahmeöffnungen dient der Aufnahme der Batteriezellen, wobei die Anschlussseite für den elektrischen Zugang von außen zum elektrischen Anschlusskontakt der Batteriezellen vorgesehen ist. Das heißt, die Anschlussseiten der jeweiligen Haltestrukturen sind beim Batteriepack nach außen gerichtet. Die Aufnahmeseiten der Haltestrukturen sind dabei in Bezug auf das Batteriepack nach innen gerichtet. Das heißt, bei Betrachtung einer einzelnen Haltestruktur liegen sich Aufnahmeseite und Anschlussseite gegenüber und bilden somit eine Ober- und Unterseite der Haltestruktur. Dabei sind die Aufnahmeöffnungen auf der Aufnahmeseite der Haltestruktur angeordnet, um für die Batteriezellen einen strukturellen Halt bereitzustellen.

Die Anschlussseiten der Haltestrukturen werden jeweils mit den Anschlussstrukturen bedeckt. Somit sind die ersten und zweiten Anschlussstrukturen jeweils auf einer Anschlussseite der ersten und zweiten Haltestruktur angeordnet, wobei die Batteriezellen zwischen der ersten und zweiten Haltestruktur angeordnet sind.

Zur Zuführung des Ladestroms bzw. zum Abführen des Entladestroms weist jede der Anschlussstrukturen ein Batteriepackanschlussbereich auf. Der Batteriepackanschlussbereich ist dabei an einem Außenrand oder einer Außenkante der Anschlussstruktur angeordnet und steht vorzugsweise von dieser hervor bzw. über die Außenabmessung des Batteriepacks hinaus. Die Batteriepackanschlussbereiche dienen entweder dem Anschluss an ein Ladegerät bzw. an einen Verbraucher. Bei Verschaltung von mehreren Batteriepacks miteinander dienen sie der Verbindung von Batterieanschlussbereichen von mehreren Batteriepacks.

Um einen gleichmäßigen Stromfluss durch die entsprechenden Anschlussstrukturen zu gewährleisten sind die Batteriepackanschlussbereiche diagonal überliegend bzgl. des Batteriepacks angeordnet. Das heißt ein Batteriepackanschlussbereich auf der elektrisch positiven Seite ist beispielsweise auf der linken oberen Seite angeordnet, wohingegen der Batteriepackanschlussbereich der elektrisch negativen Seite auf der Unterseite des Batteriepacks unten rechts angeordnet ist. Dadurch wird ein gleichmäßiger Stromfluss durch alle im Batteriepack enthaltenen Batteriezellen erreicht und somit eine punktuelle Überhitzung von einzelnen Batteriezellen durch eine ungleichmäßige Stromverteilung vermieden.

Die Anschlussstrukturen sind aus einem elektrisch leitenden Material hergestellt und sind flächig ausgebildet. Vorzugsweise decken die Anschlussstrukturen die jeweiligen Haltestrukturen fast oder vollständig ab. Durch die flächige Ausbildung der Anschlussstruktur wird eine gleichmäßige Stromverteilung zu allen angeschlossenen Batteriezellen ermöglicht. Über den Querschnitt der Anschlussstruktur und die jeweilige Fläche, d. h. über das für die Leitung des Stroms erforderliche Volumen wird die maximale Stromleitungsfähigkeit definiert. Da in einem derartigen Batteriepack teilweise über hundert Batteriezellen platziert sind und jede Batteriezelle kurzzeitig hohe Ströme zur Verfügung stellen kann, müssen die jeweiligen Anschlussstrukturen eine ausreichend hohe Stromfestigkeit bereitstellen, die der Summe der einzelnen Ströme der einzelnen Batteriezellen entspricht. D. h. über die Anschlussstrukturen fließen im Lade- und insbesondere im Entladeprozess bei einer Maximalanforderung über 100A. Vorzugsweise ist die Anschlussstruktur aus einem Metall ausgebildet. Hier bietet sich eine Verwendung von Kupfer an. Es ist jedoch auch möglich, die Anschlussstruktur aus einem anderen elektrisch leitenden Material herzustellen. Das Anschlusselement, worüber die Verbindung von der Anschlussstruktur zum elektrischen Anschlusskontakt der Batteriezelle hergestellt wird, ist aus einem zweiten anderen Metall hergestellt, beispielsweise aus Nickel oder Aluminium. Hier eignet sich der Einsatz eines Hiluminbandes. Es ist jedoch auch möglich, ein anderes elektrisch leitendes Material für die Anschlusselemente zu verwenden.

Die Anschlussstruktur weist Kontaktöffnungen auf. Dabei ist jeder Kontaktöffnung eine Anschlussöffnung der Haltestruktur zugeordnet. Vorzugsweise entsprechen die jeweiligen Kontaktöffnungen den zugeordneten Anschlussöffnungen, wobei es auch möglich ist, dass die Kontaktöffnung größer bzw. kleiner als die Anschlussöffnung der entsprechenden Haltestruktur ist. Somit gibt die Kontaktöffnung die jeweilige Anschlussöffnung der Haltestruktur und somit den darunter positionierten elektrischen Anschlusskontakt der jeweiligen Batteriezelle frei. Daher kann die Anschlussstruktur mittels des Anschlusselements durch die Anschlussöffnung hindurch in die Aufnahmeöffnung zum elektrischen Anschlusskontakt der Batteriezelle kontaktiert werden. Die Anschlussöffnungen können beliebige Formen aufweisen, vorzugsweise sind diese wie die Kontaktöffnungen im Wesentlichen rund ausgebildet.

Die Anschlusselemente, die vorzugsweise streifenförmig ausgebildet sind, werden mittels eines Fügeverfahrens an der Anschlussstruktur befestigt und ragen jeweils in die entsprechende Kontaktöffnung hinein. Als besonders vorteilhaftes Verbindungsverfahren hat sich ein Reibschweißen bzw. ein Ultraschallschweißen der Anschlusselemente an der jeweiligen Anschlussstruktur bewährt, da bei einem derartigen Verfahren eine ausreichende mechanische und auch elektrische Verbindung zwischen Anschlussstruktur und Anschlusselement erzielt wird. Die Wärmeentwicklung beim Reibschweißen ist wesentlich geringer als bei einem Punktschweißverfahren bzw. einem Lötverfahren. Darüber hinaus, ist es beim Verbinden eines dickeren Materials mit einem dünneren schwierig mit einem Punktschweißverfahren eine zuverlässige mechanische und elektrische Verbindung zu erzielen, da die Energie vom dickeren material absorbiert wird. Beim Reibschweißen hingegen wird bei den zu verbindenden Materialien an den jeweiligen Oberflächen eine flächige Verbindung geschaffen. Dabei werden die beiden zu verbindenden Flächen unter Druck relativ zueinander bewegt, wodurch eine Erwärmung und Plastifizierung des Materials auftritt. Die zu verbindenden Flächen werden dann mit hohem Druck aneinander gepresst. Somit kann eine zuverlässige mechanische als auch elektrische Verbindung auch bei den verschiedenen Materialstärken und verschiedenen Materialien erreicht werden.

Darüber hinaus ist es vorteilhaft, die Anschlussstrukturen mit den entsprechend verbundenen Anschlusselementen so vorzufertigen, dass diese vor der Montage des Batteriepacks mit den einzelnen Batteriezellen gefertigt werden kann. Nachdem die Anschlussstruktur mit den darauf befestigten Anschlusselementen, die jeweils in die Kontaktöffnungen hineinragen, auf der jeweiligen Haltestruktur platziert ist, lassen sich die elektrischen Verbindungen zwischen den positiven bzw. negativen Anschlusskontakten der jeweiligen Batteriezellen herstellen. Hier ist weiterhin ein Punktschweißen bzw. ein Löten möglich, um eine zuverlässige elektrische Verbindung des elektrischen Anschlusses der Batteriezelle mit den Anschlusselementen zu gewährleisten.

Das Anschlusselement weist einen Querschnitt auf, der bei einem Strom oberhalb eines maximalen Lade- bzw. Entladestrom schmilzt, wodurch die Verbindung zwischen Anschlussstruktur und Anschlusselement unterbrochen und somit ein weiterer Stromfluss unterbunden wird. Darüber hinaus kann verhindert werden, dass sich eine Zelle im Fehlerfall übermäßig erhitzt und bei einer entsprechenden Kettenreaktion das ganze Batteriepack funktionsunfähig wird und gefährliche Situationen auftreten können.

Zur thermischen Isolierung kann weiter eine wärmeisolierende Schicht zwischen der Anschlussstruktur und der Haltestruktur angeordnet werden, beispielsweise aus Teflon. Vorzugsweise ist die wärmeisolierende Schicht mit denselben Dimensionen und Öffnungen wie die Anschlussstruktur ausgebildet.

Über den Querschnitt des Anschlusselements lässt sich beim Laden des Batteriepacks eine gleichmäßige Stromverteilung zu den einzelnen innerhalb des Batteriepacks angeschlossenen Batteriezellen erzielen. Beim Laden des Batteriepacks ist es notwendig, alle Batteriezellen des Batteriepacks gleichmäßig zu laden, d.h. mit der gleichen Stromstärke und nicht, wie im Stand der Technik, die Batteriezellen, die näher am Anschlussbereich des Batteriepacks liegen, stärker zu laden, da sich diese dann übermäßig erwärmen würden und zu unkontrollierbaren Reaktionen führen könnten. Durch die erfindungsgemäße Ausgestaltung des Batteriepacks und insbesondere durch die Anschlussstruktur und den darauf befestigten Anschlusselementen wird der Ladestrom vom Batteriepackanschlussbereich gleichmäßig zu allen Batteriezellen des Batteriepacks verteilt. Durch eine gezielte Auswahl oder Verringerung des Querschnitts des Anschlusselements wird die Strommenge, die zur Batteriezelle fließt, oder aus dieser entnommen wird, begrenzt und verteilt sich beim Laden auch auf andere Batteriezellen. Beim Entladen stellt der definierte Querschnitt des Anschlusselements sicher, dass bei einer unkontrollierten Entladung mit einem Stromfluss über dem festgelegten Maximalstrom einer Batteriezelle, das Anschlusselement schmilzt und somit vom restlichen Batteriepack entkoppelt wird.

D. h. der Querschnitt des erfindungsgemäßen Anschlusselements stellt beim Entladen der Batteriezellen eine Sicherungsfunktion und beim Laden eine Begrenzungsfunktion dar.

Bei Verbindungen der Batteriezellen gemäß dem Stand der Technik werden die einzelnen Batteriezellen meist über Kontaktstreifen angeschlossen, wobei insbesondere beim Laden die Batteriezellen, die nah am Batteriepackanschlussbereich liegen, einen größeren Strom erhalten, als die Batteriezellen, die vom Batteriepackanschlussbereich entfernt angeordnet sind. Somit können sich hier die nah am Batteriepackanschlussbereich angeordneten Batteriezellen über eine zulässige Temperatur hinaus erwärmen und ein oben beschriebenes Fehlverhalten bewirken.

Da das gesamte Batteriepack kritischen Wärmeentwicklungen sowohl bei der Herstellung als auch während des Betriebes ausgesetzt sein kann, können die Haltestrukturen vorzugsweise aus einem temperaturbeständigen nicht elektrisch leitenden Material hergestellt sein, vorzugsweise aus Duroplast.

Die Aufnahmeöffnung ist mit ihren Abmessungen, d.h. bei einer Rundzelle mit ihrem Innendurchmesser, an die jeweiligen Außenabmessungen, d.h. den Außendurchmesser, der jeweiligen Batteriezelle angepasst, um somit eine entsprechende Klemmwirkung auf die Batteriezelle nach dem Einsetzen der Batteriezelle in die Aufnahmeöffnung zu erzielen. Alternativ oder zusätzlich kann in die Aufnahmeöffnung eine vorbestimmte Menge Klebstoff eingebracht werden, um die Fixierung der Batteriezelle zu verbessern.

Die Außenabmessungen der Anschlussstruktur entsprechen im Wesentlichen den Außenabmessungen der Haltestruktur.

Das Zusammenhalten der Haltestrukturen mit den eingesetzten Batteriezellen bzw. mit den auf den Haltestrukturen befindlichen Anschlussstrukturen wird in erster Linie über die Verbindung zwischen Anschlusselement und Anschlussstruktur bzw. Anschlusselement und dem elektrischen Anschlusskontakt der Batteriezelle erzielt. Um jedoch diese elektrische Verbindung mechanisch möglichst zu entlasten, kann es vorteilhaft sein, zwischen der ersten und zweiten Haltestruktur jeweils ein Befestigungselement anzuordnen, um die in die Haltestrukturen eingesetzten Batteriezellen somit zusätzlich zwischen der ersten und zweiten Haltestruktur fest zusammen zu halten.

Das Anschlusselement wird an der Anschlussstruktur an einer Anschlussstelle befestigt, vorzugsweise mittels Reibschweißen oder Ultraschallschweißen. Die Abmessungen der Anschlussstelle können jeweils der Quadratfläche der Breite des Anschlusselements entsprechen. Durch die somit flächige Verbindung des Anschlusselements mit der Anschlussstruktur wird eine sichere mechanische als auch eine elektrische Verbindung erreicht.

Die Aufgabe wird auch durch ein Verfahren zur Herstellung eines Batteriepacks gelöst. Das Verfahren umfasst vorzugsweise die Schritte: Einsetzen von wenigstens zwei Batteriezellen in eine Haltestruktur, Verbinden einer Anschlussstruktur mit einem Anschlusselement, wobei für jede Batteriezelle wenigstens ein Anschlusselement an jeder Anschlussstruktur vorgesehen ist. Nach dem Verbinden des Anschlusselements mit der Anschlussstruktur wird die Anschlussstruktur mit den Anschlusselementen entsprechend so ausgerichtet, dass die Anschlusselemente mit den jeweiligen elektrischen Anschlusskontakten der Batteriezellen verbunden werden können. Dann wird die andere Seite der Batteriezellen analog mit der jeweiligen Anschlussstruktur und den Anschlusselementen verbunden.

Die einzelnen Merkmale des ersten Ausführungsbeispiels lassen sich auch auf das zweite Ausführungsbeispiel anwenden und umgekehrt.

Im Folgenden werden anhand der beigefügten Figuren Ausführungsbeispiele der Erfindung näher beschrieben.

In den Figuren zeigen:
Fig. 1 eine perspektivische Darstellung eines erfindungsgemäßen Batteriepacks.
Fig. 2 eine perspektivische Ansicht einer Haltestruktur.
Fig. 3a eine Schnittdarstellung einer Batteriezelle, die in einem erfindungsgemäßen Batteriepack aufgenommen ist.
Fig. 3b eine Schnittdarstellung einer Aufnahmeöffnung bzw. einer Anschlussöffnung einer Haltestruktur.
Fig. 4 eine Darstellung einer Anschlussstruktur von oben.
Fig. 5 eine Darstellung des Batteriepacks gemäß einer anderen Ausführungsform von oben.
Fig. 6 eine vergrößerte Darstellung eines Bereichs aus Fig. 5.
Fig. 7 einen Batteriepack aus dem Stand der Technik.
Fig. 8 zeigt eine perspektivische Darstellung eines Batteriepacks gemäß einer weiteren Ausgestaltung der Erfindung.
Fig. 9 zeigt eine perspektivische Ansicht einer Haltestruktur gemäß einem weiteren Ausführungsbeispiel.
Fig.10 zeigt eine Schnittdarstellung des Batteriepacks gemäß der zweiten Ausführungsform der Erfindung.

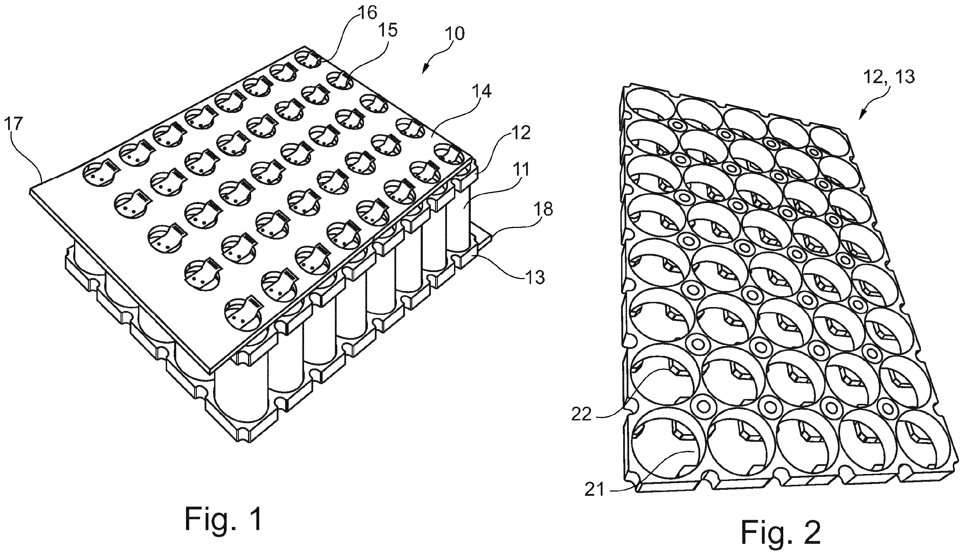

Fig. 1 zeigt eine perspektivische Darstellung eines Batteriepacks 10. Das Batteriepack 10 umfasst in diesem Ausführungsbeispiel 40 Batteriezellen 11, deren Stirnseiten jeweils in Haltestrukturen 12, 13 aufgenommen sind. Die Haltestrukturen 12, 13 sind jeweils von Anschlussstrukturen 14 bedeckt, wobei die untere Anschlussstruktur in dieser Darstellung nicht erkennbar ist. Die Anschlussstruktur 14 weist Kontaktöffnungen 16 auf. Weiter weist die Anschlussstruktur 14 Anschlusselemente 15 auf, die an der Anschlussstruktur 14 befestigt sind und jeweils in die Kontaktöffnungen 16 hineinragen. Die Anschlusselemente 15 sind jeweils über hier nicht näher bezeichnete Verbindungen mit den elektrischen Anschlusskontakten der Batteriezellen 11 verbunden. Die Anschlussstruktur 14 weist in ihrem vorderen linken Bereich einen Batteriepackanschlussbereich 17 auf, der über die Haltestruktur 12 hervorsteht. Auf der Unterseite ist ein Batteriepackanschlussbereich 18 zu erkennen, der sich von der unteren Anschlussstruktur 14 erstreckt und ebenso zum Anschluss an andere Batteriepacks bzw. an Ladegeräte oder Lasten dient.

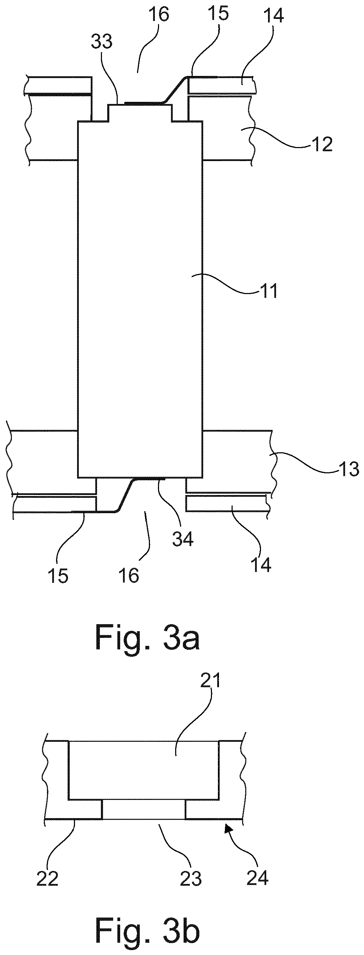

Fig. 2 zeigt eine perspektivische Darstellung einer Haltestruktur 12, 13. Die Haltestruktur 12, 13 ist in Fig. 2 von der Aufnahmeseite dargestellt. Die Aufnahmeseite ist die Seite, an der die jeweiligen Aufnahmeöffnungen 21 angeordnet sind. In die Aufnahmeöffnungen 21 werden die Batteriezellen 11 eingesetzt. Die Haltestruktur 12, 13 zeichnet sich dadurch aus, dass vorzugsweise wenigstens ein Bodenelement bzw. Vorsprung 22 in die Aufnahmeöffnung 21 hineinragt und als Auflage für die eingesetzten Batteriezellen 11 dient. In der Haltestruktur 12, 13 gemäß Fig. 2 sind vier Vorsprünge 22 vorgesehen, die in die Aufnahmeöffnung 21 hineinragen. Ein weiteres Element, welches hier zwar erkennbar, aber nicht näher bezeichnet ist, ist die der Aufnahmeöffnung 21 gegenüberliegende Anschlussöffnung 23. Diese ist in Fig. 3b detailliert dargestellt. Die Anschlussöffnungen 23 der Haltestruktur 12, 13 liegen auf der Seite, die auch als Anschlussseite bezeichnet wird.

In den Figuren 3a und 3b sind Schnittdarstellungen einer Batteriezelle 11 bzw. der Haltestrukturen 12, 13 mit den Anschlussstrukturen 14 dargestellt. Gemäß Fig. 3a ist eine Batteriezelle 11 in einer oberen und unteren Haltestruktur 12, 13 aufgenommen. Wie aus Fig. 3b zu erkennen ist, weist jede der Haltestruktur 12, 13 Aufnahmeöffnungen 21 und Anschlussöffnungen 23 auf. Somit wird eine Batteriezelle 11 jeweils mit ihrer Stirnseite in eine Aufnahmeöffnung 21 eingesetzt und der elektrische Anschlusskontakt der Batteriezelle 11 ist dann durch die Anschlussöffnung 23 erreichbar. Die elektrischen Anschlusskontakte 33 und 34 der Batteriezelle 11 liegen unterhalb der Oberseite bzw. Unterseite der Haltestruktur 12, 13. D.h. die elektrischen Anschlusskontakte 33 und 34 liegen tiefer als die Flächen der Haltestrukturen 12, 13, auf denen jeweils die Anschlussstrukturen 14 aufgelegt werden. Gemäß Fig. 3b weist der Bereich, in dem die Batteriezelle 11 aufgenommen wird, Vorsprünge 22 auf, die als einzelne Vorsprünge ausgebildet sein können bzw. auch als kreisrunder Flansch oder Rand in die Öffnung vorspringen können. Die Abmessungen der Aufnahmeöffnungen 21 sind dabei an die Außenabmessungen der Batteriezellen 11 angepasst. Über bzw. auf den Haltestrukturen 12 und 13 sind die Anschlussstrukturen 14 jeweils aus einem leitfähigen elektrischen Material angeordnet. Die Anschlussstrukturen 14 weisen jeweils Kontaktöffnungen 16 auf. Durch diese Kontaktöffnungen 16 werden Anschlusselemente 15 geführt, die an der Anschlussstruktur 14 vorzugsweise mittels eine Fügeverfahrens beispielsweise Reibschweißen bzw. Ultraschallschweißen befestigt sind. Das Anschlusselement 15 erstreckt sich somit in die Kontaktöffnung 16 und wird mittels eines üblichen Kontaktierungsverfahrens, wie Punktschweißen, Löten oder dgl. mit den elektrischen Anschlüssen 33 und 34 der Batteriezelle 11 verbunden.

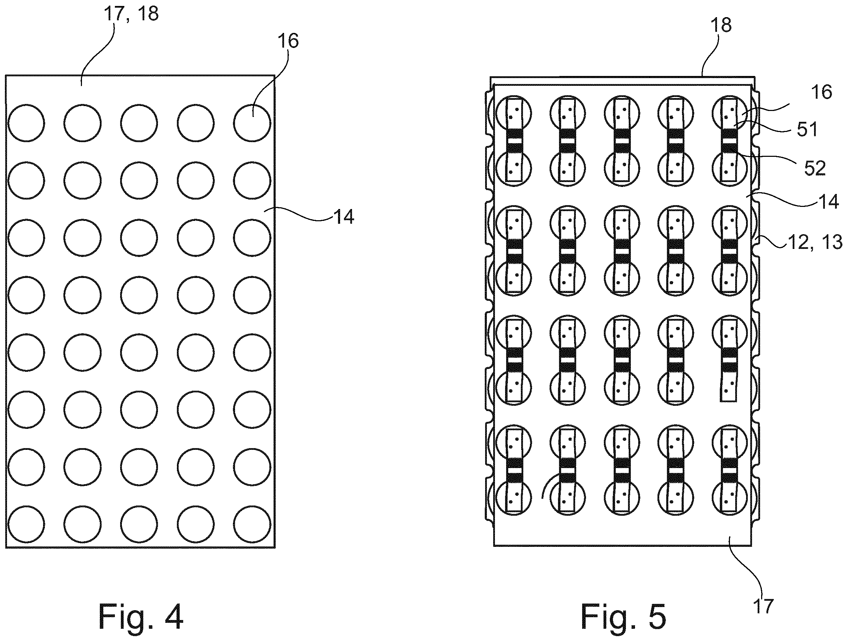

In Fig. 4 ist eine Anschlussstruktur 14 in einer Ansicht von oben dargestellt, die entsprechende Kontaktöffnungen 16 aufweist. Die Anzahl der Kontaktöffnungen 16 entspricht dabei der Anzahl der im Batteriepack 10 enthaltenen Batteriezellen 11. Die Größe der Kontaktöffnung 16 ist so bemessen, dass ein Anschlusselement 15 durch die Kontaktöffnung 16 hindurchgeführt werden kann und mit den elektrischen Anschlusskontakten 33, 34 der Batteriezelle 11 kontaktiert werden kann. Die Anschlussstruktur 14 gemäß Fig. 4 weist auch einen Batteriepackanschlussbereich 17, 18 auf, an den Zuleitungen von Ladegeräten oder Lasten angeschlossen werden können. Bei Zusammenschluss von mehreren Batteriepacks 10 werden die mehreren Batteriepacks jeweils an ihren Batteriepackanschlussbereichen 17, 18 miteinander verbunden. In einem derartigen Fall sind die einzelnen Anschlussstrukturen 14 jeweils für den Gesamtstrom des zusammen geschalteten Batteriepacks ausgelegt.

Fig. 5 zeigt ein weiteres Ausführungsbeispiel des erfindungsgemäßen Batteriepacks. Bei dieser Ausführungsform sind die Anschlusselemente 51 so ausgeführt, dass ein Anschlusselement 51 streifenförmig ausgebildet ist und jeweils in zwei benachbarte Kontaktöffnungen 16 hineinragt. Dieses streifenförmige Anschlusselement 51 ist an den Randbereichen der entsprechenden Kontaktöffnungen 16 jeweils an einer Anschlussstelle 52 mit der Anschlussstruktur 14 verbunden. Das streifenförmige Anschlusselement 51 erstreckt sich in die entsprechenden Kontaktöffnungen 16 und wird von dort mit den elektrischen Anschlusskontakten 33, 34 der entsprechenden Batteriezelle 11 verbunden. Wie in diesem Ausführungsbeispiel zu erkennen ist, liegen auf einer Seite des Batteriepacks 10 jeweils gleichartige elektrische Anschlusskontakte 33, 34 d.h. entweder die positiven oder die negativen Anschlusskontakte der Batteriezellen 11.

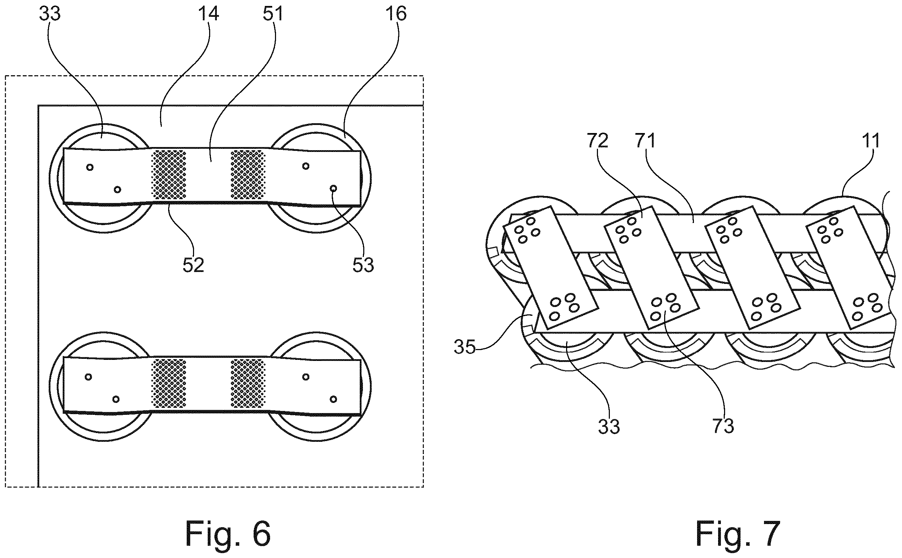

Fig. 6 zeigt eine vergrößerte Darstellung eines Bereichs aus Fig. 5, bei der eine Anschlussstruktur 14 über ein streifenförmiges Anschlusselement 51, welches in zwei Kontaktöffnungen 16 hineinragt, mit den entsprechenden Batteriezellen 11 verbunden ist. Von den Batteriezellen 11 ist beispielsweise der Anschlusskontakt 33 zu erkennen, wobei dieser Anschlusskontakt 33 mittels Lötstellen oder Schweißstellen 53 mit dem streifenförmigen Anschlusselement 51 verbunden ist. Das streifenförmige Anschlusselement 51 ist in diesem Ausführungsbeispiel mittels zwei Anschlussstellen 52 mit der Anschlussstruktur 14 verbunden. In einer weiteren Ausgestaltung ist es möglich, dieses streifenförmige Anschlusselement 51 jeweils nur an einer Anschlussstelle 52 mit der Anschlussstruktur 14 zu verbinden, um somit zu einem effizienteren und weniger aufwendigem Verbindungsverfahren zwischen der Anschlussstruktur 14 und dem streifenförmigen Anschlusselement 51 zu gelangen.

Fig. 7 stellt ein herkömmliches Batteriepack dar, bei dem mehrere Batteriezellen 11 parallel verschaltet sind. Wie einfach aus der Darstellung erkennbar ist, sind die einzelnen Batteriezellen 11 direkt mit streifenförmigen Anschlusselementen 71 und 72 miteinander verbunden, wobei die Verbindungsstellen 73 sowohl der Verbindung zwischen den Querverbindungen 72 und den Längsverbindungen 71 als auch dem darunterliegenden elektrischen Anschlusskontakt 33 der Batteriezelle 11 dienen. Somit wird die Wärme, die bei der Verbindung von Quer und Längsverbindungen 71 und 72 auftritt, auch unmittelbar auf den darunterliegenden Anschlusskontakt 33 geleitet, so dass die Batteriezelle 11 auch dieser Wärmeeinwirkung beim Montageprozess ausgesetzt ist. Durch zu viel Wärme kann auch die Isolation 35 der Batteriezelle 11 beschädigt werden.

Beim Verbinden der Batteriezellen 11 wie in Figur 7 treten große Wärmeeinwirkungen auf, die auf die Batteriezellen 11 übertragen werden und zu gefährlichen Situationen führen können. Darüber hinaus kann bei einem Ausfall einer Batteriezelle 11, diese zu einem Ausfall des gesamten Batteriepacks führen, da es möglicherweise zu einem Aufschmelzen der Querverbindung 72 oder der Längsverbindung 71 kommt. Damit wird die für den hohen Strom verantwortliche Batteriezelle 11 nicht zuverlässig von den anderen Batteriezellen 11 getrennt, so dass es hierdurch zu gefährlichen Kettenreaktionen führen kann und letztlich mehrere Batteriezellen 11 ausgasen und explodieren können.

Beim Laden eines Batteriepacks gemäß Fig. 7 werden die Batteriezellen 11, die an der Stromzuführungsseite liegen stärker mit Strom versorgt, als bei einer Anschlussstruktur 14 gemäß der vorliegenden Erfindung. Über die streifenförmigen Quer- und Längsverbindungen 71 und 72 ist keine zuverlässige Verteilung des zugeführten Stroms möglich. Folglich erwärmen sich die an der Stromzuführung liegenden Batteriezellen 11 stärker, als die Batteriezellen 11, die weiter von der Stromzuführung entfernt liegen.

Ein weiterer Vorteil der erfindungsgemäßen Ausgestaltung ergibt sich durch die thermische Entkopplung von Anschlussstruktur 14 und Anschlusskontakt 33, 34 der Batteriezelle 11. Durch den Abstand zwischen der Anschlussstruktur 14 und dem Anschlusskontakt 33, 34, wie es gut in Fig. 3a zu erkennen ist, kann sich eine Wärmeeinwirkung durch einen hohen Stromfluss in der Anschlussstruktur 14 oder durch die Herstellung der Verbindung an der Anschlussstelle 52 zwischen Anschlusselement 51 und Anschlussstruktur 14 nicht auf die Batteriezelle 11 übertragen. Der Abstand lässt sich über die Vorsprünge 22 bzw. den Rand der Haltestrukturen 12, 13 einstellen. D.h. bei großen Batteriepacks mit vielen Batteriezellen 11 und folglich einem hohen Strom auf der Anschlussstruktur 14 kann eine Haltestruktur 12, 13 verwendet werden, bei der der wenigstens eine Vorsprung 22 dicker ausgebildet ist, als bei einer Haltestruktur 12, 13, die für wenige Batteriezellen 11 ausgelegt ist. Folglich wird die Batteriezelle 11 von dem aus dieser Wärmeeinwirkung resultierendem Stress verschont und nur der Wärmeeinwirkung bei der Verbindungsherstellung zwischen Anschlusselement 15, 51 und Anschlusskontakt 33, 34 ausgesetzt und der Wärmeeinwirkung durch einen eigenen Stromfluss.

Die Größe des erfindungsgemäßen Batteriepacks ist durch die Wahl der Anzahl Batteriezellen beliebig variierbar. Zudem kann die Form des Batteriepacks durch die Anzahl und die Anordnung der Batteriezellen auf den jeweiligen Anwendungsfall abgestimmt werden. Falls beispielsweise in einem Fahrzeug mehrere miteinander verbundene Batteriepacks Anwendung finden, besteht bei einem Ausfall einer oder mehrerer Batteriezellen die Möglichkeit, nur das Batteriepack mit den ausgefallenen Batteriezellen auszutauschen, was zu wesentlichen wirtschaftlichen Vorteilen führt.

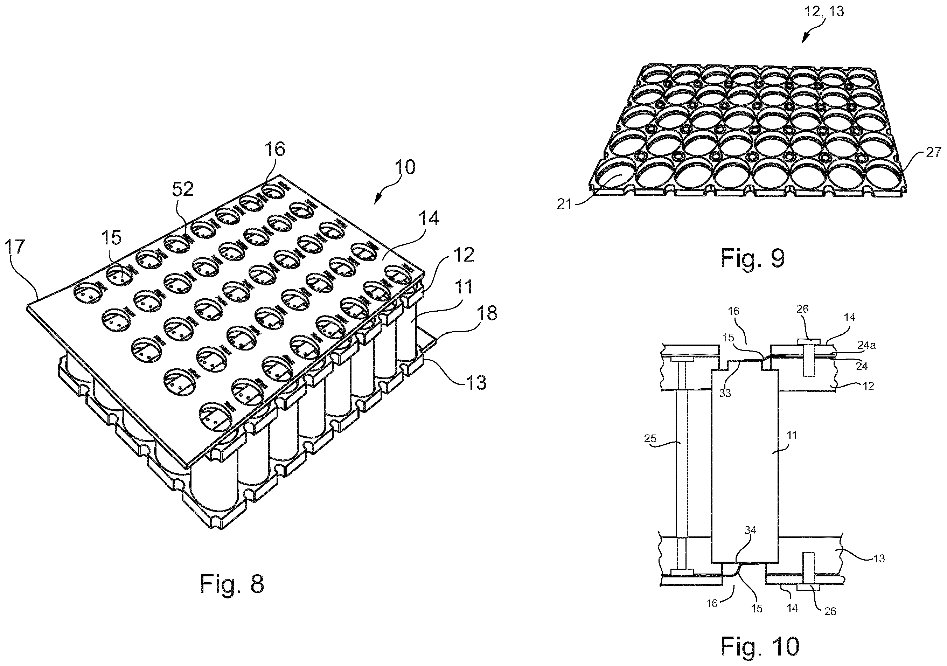

Fig. 8 zeigt ein erfindungsgemäßes Batteriepack gemäß einem zweiten Ausführungsbeispiel der vorliegenden Erfindung.

Das Batteriepack 10 setzt sich aus zwei Anschlussstrukturen 14 zusammen. Weiter sind zwei Haltestrukturen 12 und 13 vorgesehen. Die Batteriezellen 11 sind jeweils in nicht näher dargestellte Aufnahmeöffnungen 21 der Haltestrukturen 12, 13 eingesetzt bzw. in diesen aufgenommen. Die Anschlussstrukturen 14, die auf beiden nach außen gerichteten Flächen der Haltestrukturen 12 und 13 aufliegen, sind ähnlich ausgebildet, wie die Anschlussstrukturen des ersten Ausführungsbeispiels.

Anders als im ersten Ausführungsbeispiel sind die Anschlusselemente 15 hier jedoch zwischen der nach unten gerichteten Fläche 24a der oberen Anschlussstruktur 14 und der nach oben gerichteten Fläche 24 der ersten Haltestruktur 12 angeordnet bzw. für die in Fig. 8 unten angeordnete Anschlussstruktur 14, sind die Anschlusselemente 15 auf der nach oben gerichteten Seite angeordnet. Dies hat den Vorteil, dass die Anschlusselemente 15, die vorzugsweise aus einem Nickel- oder Hiluminband hergestellt sind, nicht so stark abgeknickt werden müssen, wie im ersten Ausführungsbeispiel.

Bei der Herstellung des Batteriepacks 10 können somit in zwei getrennten bzw. parallelen Vorgängen einerseits die Batteriezellen 11 in die Haltestrukturen 12, 13 eingesetzt werden und beispielsweise mit den Befestigungselementen 25 zusammengehalten werden. Parallel dazu lassen sich die Anschlussstrukturen 14 mit den Kontaktöffnungen 16 und Anschlusselementen 15 herstellen, wobei die Anschlusselemente 15 jeweils so angeordnet werden, dass sie in die zugeordnete Kontaktöffnung 16 hineinragen. Die Verbindung zwischen dem jeweiligen Anschlusselement 15 und der Anschlussstruktur 14 wird analog zum ersten Ausführungsbeispiel durch Reibschweißen bzw. durch Ultraschallschweißen hergestellt. Nachdem alle Anschlusselemente 15 an der Anschlussstruktur 14 befestigt sind, wird die Anschlussstruktur 14 umgedreht und auf die nach oben bzw. außen gerichtete Fläche 24 der Haltestruktur 12 bzw. 13 gelegt. Zusätzlich kann zwischen den Haltestrukturen 12 bzw. 13 und die jeweilige Anschlussstruktur 14 eine isolierende Schicht eingeführt werden.

Das Zusammenhalten der Haltestrukturen 12 bzw. 13 mittels der Befestigungselemente 25 ist nicht zwingend, es wird dadurch aber insbesondere der Fertigungsvorgang des Batteriepacks 10 erleichtert und sicherer. Gegebenenfalls kann es auch genügen, sowohl während des Fertigungsvorganges als auch beim Einsatz des Batteriepacks 10 die Klemmwirkung zwischen Batteriezellen 11 und Aufnahmeöffnungen 21 derart zu nutzen, dass die Haltestrukturen 12 bzw. 13 ausreichend zusammengehalten werden.

Nachdem die Anschlussstruktur 14 mit den Anschlusselementen 15 auf dem vorgefertigten Batteriepack 10 bestehend aus den Batteriezellen 11 und den beiden Haltestrukturen 12 und 13, aufgesetzt bzw. aufgelegt wird, kann die Anschlussstruktur 14 mit weiteren Befestigungselementen 26 jeweils an einer der Haltestrukturen 12, 13 befestigt werden. Es ist ebenso möglich ein Befestigungselement durch das Batteriepack 10 hindurch zu führen und auf den gegenüberliegenden Seiten der Anschlussstrukturen 14 miteinander zu verschrauben. Dadurch wird die Anschlussstruktur 14 mit den Anschlusselementen 15 in Bezug auf die Haltestrukturen 12 und 13 und den darin aufgenommenen Batteriezellen 11 fixiert. Nun kann in einem weiteren Verfahren die elektrische Verbindung zwischen den jeweiligen Anschlusselementen 15 und den positiven bzw. negativen elektrischen Kontakten 33, 34 der Batteriezelle 11 hergestellt werden. Das Vorsehen von Befestigungselementen 26 ist nicht zwingend. Je nach Anwendungsfall, d.h., beispielsweise wenn wenig mechanische Belastungen wie Vibrationen und dergleichen auf das Batteriepack 10 einwirken, genügt für die Fixierung der Anschlussstrukturen die Verbindung zwischen den Anschlusselementen 15 und den Anschlusskontakten 33, 34 der Batteriezellen 11.

Eine derartige Anordnung des Anschlusselements 15 zwischen der Anschlussstruktur 14 und der Haltestruktur 12, 13 bzw. dem elektrischen Anschlusskontakt 33 bzw. 34 hat den Vorteil, dass das Anschlusselement 15 nur minimal mechanisch abgeknickt werden muss. Dadurch können die Anschlusselemente 15 beim Herstellen der Reibschweißverbindung bzw. Ultraschallreibschweißverbindung einfach im Bereich der Kontaktstellen 52 neben der entsprechenden Kontaktöffnung 16 aufgelegt werden und mit der Anschlussstruktur 14 verbunden werden. Nachdem dann alle Anschlusselemente 15 mit der Anschlussstruktur 14 verbunden sind, wird die Anschlussstruktur 14 umgedreht, so dass die Anschlusselemente 15 zwischen der Haltestruktur 12, 13 und der Anschlussstruktur 14 liegen und somit fast unmittelbar auf den elektrischen Kontakten 33, 34 der Batteriezelle 11 aufliegen. Dann kann die andere elektrische Verbindung am elektrischen Anschlusskontakt 33, 34 der Batteriezelle 11 hergestellt werden. Da das Anschlusselement 15 dazu nicht mehr so stark abgeknickt werden muss, wie im ersten Ausführungsbeispiel, lässt sich die elektrische Verbindung zuverlässiger herstellen und es entstehen weniger Kontaktfehler. Zudem entstehen keine sich negativ auf die Verbindung einwirkende Zugkräfte, welche durch Rückfederungskräfte von stark abgeknickten Anschlusselementen 15 ausgelöst werden.

Ein weiterer Vorteil, der sich aus diesem Ausführungsbeispiel ergibt, liegt darin, dass bei der mechanischen Belastung im Betrieb des Batteriepacks, beispielsweise durch das Auftreten von Vibrationen, die Anschlusselemente 15 weniger unter mechanischer Spannung stehen und somit ein Aufbrechen des Kontakts zwischen einem Anschlusselement 15 und den elektrischen Anschlusskontakten 33 bzw. 34 der Batteriezelle 11 weitgehend verhindert wird, Zudem besteht ein wichtiger Vorteil darin, dass bei diesem Ausführungsbeispiel die Verbindungsstellen zwischen Anschlusselementen 15 und Anschlussstrukturen 14 gegen äußere Einwirkungen, die beispielsweise mechanischer Art sein können, geschützt sind. Es entsteht zudem eine den Batteriezellen 11 abgewandte komplett ebene Oberfläche, was insbesondere das Anbringen einer Deckfolie oder eines Überzuges wesentlich erleichtert.

Fig. 9 zeigt eine alternative Ausgestaltung der Haltestrukturen 12 bzw. 13. Die alternative Ausgestaltung der Haltestruktur 12, 13 weist im Gegensatz zu der Haltestruktur in Fig. 2 einen umlaufenden Flansch 27 auf, der die Begrenzung der Aufnahmeöffnung 21 für die eingesetzte Batteriezelle 11 bildet. Die Öffnung mit dem kleineren Durchmesser, die sich innerhalb des Flansches 27 erstreckt, ist die Anschlussöffnung 23 und die Öffnung, die in der Darstellung gemäß Fig. 9 nach oben gerichtet ist und einen größeren Durchmesser als die Anschlussöffnung 23 aufweist, ist die Aufnahmeöffnung 21.

Die Herstellung der Haltestruktur 12, 13 gemäß Fig. 9 ist im Vergleich zu der Haltestruktur gemäß Fig. 2 einfacher. So können die Haltestrukturen 12, 13 mit Aufnahmeöffnung 21 und Anschlussöffnung 23 in einem vereinfachten Spritzgussverfahren oder spanabhebend sehr wirtschaftlich hergestellt werden.

Fig. 10 zeigt eine Schnittdarstellung des Batteriepacks 10 gemäß Fig. 8. Eine Batteriezelle 11 ist zwischen den ersten und zweiten Haltestrukturen 12 und 13 eingesetzt und wird von den jeweiligen Aufnahmeöffnungen 21 gehalten. Der nach innen ragende Flansch 27 ist hier nicht mehr eingezeichnet, ragt jedoch über den oberen bzw. unteren Stirnrand der Batteriezelle 11 in die jeweilige Öffnung der Haltestruktur 12, 13. Die positiven und negativen elektrischen Anschlusskontakte 33 und 34 liegen innerhalb der Haltestruktur 12, 13 und sind somit vor einem vorzeitigen Kontakt beim Auflegen der Anschlussstrukturen 14 geschützt. Die Anschlussstruktur 14 weist Kontaktöffnungen 16 auf, wobei die Anschlusselemente 15 in diese Kontaktöffnung 16 hineinragen. Das Anschlusselement 15 ist hier wesentlich weniger abgeknickt bzw. mechanisch verformt als im Ausführungsbeispiel gemäß Fig. 3A. Weiter zeigt die Fig. 10 ein erstes Befestigungselement 25, welches die erste und zweiten Haltestruktur 12 und 13 mit den eingesetzten Batteriezellen 11 zusammenhält. Dazu sind jeweils zwei Schrauben in Bohrungen der Haltestrukturen 12, 13 eingeführt und greifen jeweils in ein Gewinde einer Hülse 25 ein. Weiter ist ein weiteres Befestigungselement 26 dargestellt, welches die Anschlussstrukturen 14 mit den Haltestrukturen 12, 13 verschraubt.

Bei den Befestigungselementen 25, 26 handelt es sich um je nach Anwendungsfall vorzunehmende Maßnahmen. So gibt es Anwendungsfälle, bei denen diese Befestigungselemente 25, 26 entfallen können und es gibt Anwendungsfälle wo nur das eine oder das andere Befestigungselement 25 bzw. 26 oder auch beide Befestigungselemente 25, 26 zum Einsatz kommen können. Insbesondere ist es für die Wahl des Einsatzes der Befestigungselemente 25, 26 ausschlaggebend, ob und gegebenenfalls welchen äußeren Einflüssen das Batteriepack 10 ausgesetzt ist.

In einem Ausführungsbeispiel enthält ein Batteriepack: wenigstens zwei Batteriezellen (11), wobei jede Batteriezelle (11) jeweils einen positiven und einen negativen elektrischen Anschlusskontakt (33, 34) aufweist, wobei den elektrisch positiven Anschlusskontakten (33) der Batteriezellen (11) eine erste Anschlussstruktur (14) und den elektrisch negativen Anschlusskontakten (34) der Batteriezellen (11) eine zweite Anschlussstruktur (14) zugeordnet ist und jede Anschlussstruktur (14) eine Stromfestigkeit aufweist, die der Summe der Einzelströme jeder angeschlossenen Batteriezelle (11) entspricht, wobei jede Batteriezelle über wenigstens ein Anschlusselement (15, 51) mit der ersten Anschlussstruktur (14) und über wenigstens ein weiteres Anschlusselement (15, 51) mit der zweiten Anschlussstruktur (14) verbunden ist, wobei ein Querschnitt des jeweiligen Anschlusselements (15, 51) an einen vorbestimmten Maximalstrom einer Batteriezelle (11) angepasst ist.

Insbesondere sind die wenigstens zwei Batteriezellen (11) in einer Parallelschaltung verschaltet, bei der jeweils positive und negative elektrische Anschlusskontakte (33, 34) je einer Anschlussstruktur (14) zugeordnet sind.

Insbesondere enthält das Batteriepack (10) weiter wenigstens eine Haltestruktur (12, 13) zur Aufnahme der wenigstens zwei Batteriezellen (11).

Insbesondere sind die wenigstens zwei Batteriezellen (11) als Rundzellen ausgebildet. Insbesondere sind die elektrischen Anschlusskontakte (33, 34) der Batteriezelle (11) an einander gegenüberliegenden Stirnflächen der Batteriezelle (11) angeordnet.

Insbesondere ist eine erste Haltestruktur (12) auf der Seite der positiven elektrischen Anschlusskontakte (33) und eine zweite Haltestruktur (13) auf der Seite der negativen elektrischen Anschlusskontakte (34) angeordnet.

Insbesondere weist die Haltestruktur (12, 13) Aufnahmeöffnungen (21) zur Aufnahme wenigstens eines Teils der äußeren Form jeder Batteriezelle (11) des Batteriepacks auf. Insbesondere weist jede Aufnahmeöffnung (21) eine vorbestimmte Tiefe zur räumlichen Fixierung der Batteriezelle auf.

Insbesondere definiert die Anordnung der Aufnahmeöffnungen (21) in der Haltestruktur (12, 13) jeweils einen Abstand zwischen den Batteriezellen (11) des Batteriepacks, die in den Aufnahmeöffnungen (21) eingesetzt sind.

Insbesondere weist die Haltestruktur (12, 13) Anschlussöffnungen (23) für jede Batteriezelle (11) des Batteriepacks (10) auf, wobei die Anschlussöffnungen (23) jeweils eine elektrische Kontaktierung der in die Aufnahmeöffnungen (21) eingesetzten Batteriezellen (11) ermöglichen.

Insbesondere ist die Aufnahmeöffnung (21) größer als eine zugeordnete Anschlussöffnung (23).

Insbesondere weist die Haltestruktur (12, 13) jeweils eine Aufnahmeseite zur Aufnahme der Batteriezellen (11) und eine Anschlussseite für einen elektrischen Anschluss der Batteriezellen (11) auf, wobei die Aufnahmeseite der Anschlussseite gegenüberliegt.

Insbesondere sind die Anschlussöffnungen (23) der Haltestruktur (12, 13) auf der Anschlussseite angeordnet.

Insbesondere liegt die erste Anschlussstruktur (14), die mit elektrisch positiven Anschlusskontakten (33) verbunden ist, der zweiten Anschlussstruktur (14), die mit den elektrisch negativen Anschlusskontakten (34) verbunden ist, gegenüber.

Insbesondere ist die erste Anschlussstruktur (14) auf der Anschlussseite der ersten Haltestruktur (12) und die zweite Anschlussstruktur (14) auf der Anschlussseite der zweiten Haltestruktur (13) angeordnet und die Batteriezellen (11) sind zwischen der ersten Haltestruktur (12) und der zweiten Haltestruktur (13) angeordnet.

Insbesondere weist jede Anschlussstruktur (14) einen Batteriepackanschlussbereich (17, 18) auf.

Insbesondere steht der Batteriepackanschlussbereich (17, 18) über eine Außenkante der jeweiligen Haltestruktur (12, 13) hervor.

Insbesondere sind zwei Batteriepackanschlussbereichen (17, 18) vorhanden, die diagonal gegenüberliegend am Batteriepack (10) angeordnet sind.

Insbesondere ist jede Anschlussstruktur (14) aus einem elektrisch leitenden Material hergestellt und flächig ausgebildet, um eine gleichmäßige Stromverteilung zu allen angeschlossenen Batteriezellen (11) zu ermöglichen.

Insbesondere ist die Anschlussstruktur (14) aus einem ersten Metall, vorzugsweise aus Kupfer, oder einem anderen elektrisch leitendem Material ausgebildet.

Insbesondere ist das Anschlusselement (15, 51) aus einem zweiten Metall, vorzugsweise aus Nickelband (Hiluminband) oder einem anderen elektrisch leitendem Material ausgebildet. Insbesondere weist die Anschlussstruktur (14) Kontaktöffnungen (16) auf, die jeweils den Anschlussöffnungen (23) einer Haltestruktur (12, 13) zugeordnet sind.

Insbesondere legen die Kontaktöffnungen (16) der Anschlussstruktur (14) jeweils die Anschlussöffnungen (23) der Haltestruktur (12, 13) und einen entsprechenden Kontaktbereich des positiven oder negativen Anschlusskontaktes (34, 33) der Batteriezelle (11) frei. Insbesondere ragen die Anschlusselemente (15, 51), die jeweils mittels eines Fügeverfahrens an der Anschlussstruktur (14) befestigt sind, in die jeweiligen Kontaktöffnungen (16) hinein. Insbesondere sind die Anschlusselemente (15, 51) mittels Reibschweißen oder Ultraschallschweißen an der Anschlussstruktur (14) befestigt.

Insbesondere ist das Anschlusselement (15, 51) am elektrischen Anschlusskontakt (34, 33) der Batteriezelle (11) mittels einer stoffschlüssigen Verbindung verbunden.

Insbesondere ist das Anschlusselement (15, 51) am elektrischen Anschlusskontakt (33, 34) der Batteriezelle (11) mittels Punktschweißverbindung oder einer Lötverbindung verbunden.

Insbesondere weist das Anschlusselement (15, 51) einen Querschnitt auf, der bei einem Strom oberhalb eines maximalen Lade- bzw. Entladestroms schmilzt und die Verbindung zwischen Anschlussstruktur (14) und elektrischem Anschlusskontakt (33, 34) der Batteriezelle (11) unterbricht.

Insbesondere ist zwischen der Anschlussstruktur (14) und der Anschlussseite der Haltestruktur (12, 13) eine Wärme isolierende Schicht, vorzugsweise aus Teflon, angeordnet. Insbesondere ist der Querschnitt des Anschlusselements (15, 51) so ausgelegt, dass beim Laden der im Batteriepack (10) angeschlossenen Batteriezellen (11) eine gleichmäßige Stromverteilung erfolgt.

Insbesondere ist die Haltestruktur (12, 13) aus einem temperaturbeständigen und elektrisch nichtleitenden Material, vorzugweise Duroplast, ausgebildet.

Insbesondere ist die Aufnahmeöffnung (21) in ihren Abmessungen an den Außenumfang der aufzunehmenden Batteriezelle (11) angepasst und übt eine Klemmwirkung auf die Batteriezelle (11) aus.

Insbesondere entsprechen die Außenabmessungen der Anschlussstruktur (14) im Wesentlichen den Außenabmessungen der Haltestruktur (12, 13).

Insbesondere weist die Anschlussstruktur (14) Anschlussstellen (52) zur jeweiligen Befestigung der Anschlusselemente (15, 51) auf, deren Abmessungen jeweils wenigstens der Quadratfläche der Breite des Anschlusselements (15, 51) entsprechen.

Insbesondere ist zwischen der ersten und zweiten Haltestruktur (12, 13) wenigstens ein Befestigungselement angeordnet, um die beiden Haltestrukturen (12, 13) mit den eingesetzten Batteriezellen (11) zusammenzuhalten.

Insbesondere sind die Batteriezellen (11) in den Aufnahmeöffnungen (21) mittels eines Klebstoffes fixiert.

Weiter wird ein Verfahren zum Herstellen eines Batteriepacks gemäss Anspruch 12 angegeben.

## Patentansprüche

1. Batteriepack umfassend:
- wenigstens zwei Batteriezellen (11), wobei jede Batteriezelle (11) einen positiven und einen negativen elektrischen Anschlusskontakt (33, 34) aufweist, die an gegenüberliegenden Seiten der Batteriezelle (11) angeordnet sind,
- wobei alle elektrisch positiven Anschlusskontakte (33) der Batteriezellen (11) mit einer ersten Anschlussstruktur (14) und alle elektrisch negativen Anschlusskontakte (34) der Batteriezellen (11) mit einer zweiten Anschlussstruktur (14) verbunden sind,
- wobei die erste Anschlussstruktur (14) und die zweite Anschlussstruktur (14) auf gegenüberliegenden Seiten des Batteriepacks (10) angeordnet sind, und
- wobei jede Anschlussstruktur (14) eine Stromfestigkeit aufweist, die der Summe der Einzelströme jeder angeschlossenen Batteriezelle (11) entspricht,
- wobei jede Batteriezelle über jeweils wenigstens ein streifenförmiges Anschlusselement (15, 51) mit der ersten Anschlussstruktur (14) und über jeweils wenigstens ein weiteres streifenförmiges Anschlusselement (15, 51) mit der zweiten Anschlussstruktur (14) verbunden ist,
- wobei ein Querschnitt des jeweiligen Anschlusselements (15, 51) an einen vorbestimmten Maximalstrom einer Batteriezelle (11) angepasst ist,
- wobei eine erste elektrisch nicht leitende Haltestruktur (12) auf der Seite der positiven elektrischen Anschlusskontakte (33) und eine zweite elektrisch nicht leitende Haltestruktur (13) auf der Seite der negativen elektrischen Anschlusskontakte (34) angeordnet ist,
- wobei die erste und die zweite Haltestruktur (12, 13) jeweils gleich ausgebildet sind, und jede der Haltestrukturen (12, 13) Aufnahmeöffnungen (21) zur Aufnahme jeweils der Stirnseite der Batteriezellen (11) des Batteriepacks aufweist,
- wobei die Anordnung der Aufnahmeöffnungen (21) in der ersten und zweiten Haltestruktur (12, 13) jeweils einen Abstand zwischen den Batteriezellen (11) definiert, um eine ausreichende Belüftung zwischen den einzelnen Batteriezellen des Batteriepacks zu ermöglichen und wobei die Batteriezellen (11) zwischen der ersten und zweiten Haltestruktur (12, 13) freiliegen,
- wobei eine Länge und Breite der ersten und zweiten Anschlussstruktur (14) jeweils im Wesentlichen einer Länge und Breite der ersten und zweiten Haltestruktur (12, 13) entsprechen und
- wobei die erste und zweite Anschlussstruktur (14) jeweils als großflächige ebene Struktur ausgebildet ist, die die jeweils äußeren und freiliegenden und sich gegenüberliegenden Oberflächen des Batteriepacks bilden,
- wobei die Anschlusselemente (15, 51) jeweils an einer den Batteriezellen (11) zugewandten Seite der Anschlussstruktur (14) befestigt sind.

2. Batteriepack nach Anspruch 1, wobei die Haltestruktur (12, 13) eine Fläche (24) aufweist, die zur Anschlussstruktur (14) gerichtet ist, wobei die Fläche (24) von Anschlussöffnungen (23) durchbrochen ist und die Anschlussstruktur (14) im montierten Zustand auf der Fläche (24) der Haltestruktur (12, 13) aufliegt, und die Anschlusselemente (15, 51) die Anschlussöffnungen (23) durchdringen.

3. Batteriepack nach einem der Ansprüche 1-2, wobei zwischen der ersten und zweiten Haltestruktur (12, 13) wenigstens ein Befestigungselement (25) angeordnet ist, um die beiden Haltestrukturen (12, 13) mit den eingesetzten Batteriezellen (11) zusammenzuhalten, wobei das Befestigungselement (25) aus elektrisch nicht leitendem Material ausgebildet ist oder von einem elektrisch isolierenden Material umgeben ist.

4. Batteriepack nach einem der vorherigen Ansprüche 2 oder 3, wobei die Aufnahmeöffnung (21) größer als eine zugeordnete Anschlussöffnung (23) ist.

5. Batteriepack nach einem der vorherigen Ansprüche 2 - 4, wobei die Haltestruktur (12, 13) jeweils eine Aufnahmeseite zur Aufnahme der Batteriezellen (11) und eine Anschlussseite für einen elektrischen Anschluss der Batteriezellen (11) aufweist, wobei die Aufnahmeseite der Anschlussseite gegenüberliegt und die Anschlussöffnungen (23) der Haltestruktur (12, 13) auf der Anschlussseite angeordnet sind.

6. Batteriepack nach einem der vorherigen Ansprüche 2 - 5, wobei die Anschlussstruktur (14) Kontaktöffnungen (16) aufweist, die jeweils den Anschlussöffnungen (23) einer Haltestruktur (12, 13) zugeordnet sind und die Kontaktöffnungen (16) der Anschlussstruktur (14) jeweils die Anschlussöffnungen (23) der Haltestruktur (12, 13) und einen entsprechenden Kontaktbereich des positiven oder negativen Anschlusskontaktes (34, 33) der Batteriezelle (11) freilegen.

7. Batteriepack nach einem der vorherigen Ansprüche, wobei die Anschlusselemente (15, 51) jeweils mittels eines Fügeverfahrens an der Anschlussstruktur (14) befestigt sind und in die jeweiligen Kontaktöffnungen (16) hineinragen.

8. Batteriepack nach einem der vorherigen Ansprüche, wobei das Anschlusselement (15, 51) einen Querschnitt aufweist, der bei einem Strom oberhalb eines maximalen Lade- bzw. Entladestroms schmilzt und die Verbindung zwischen Anschlussstruktur (14) und elektrischem Anschlusskontakt (33, 34) der Batteriezelle (11) unterbricht.

9. Batteriepack nach einem der vorherigen Ansprüche, wobei der Querschnitt des Anschlusselements (15, 51) so ausgelegt ist, dass beim Laden der im Batteriepack (10) angeschlossenen Batteriezellen (11) eine gleichmäßige Stromverteilung erfolgt.

10. Batteriepack nach einem der vorherigen Ansprüche, wobei die Anschlussstruktur (14) Anschlussstellen (52) zur jeweiligen Befestigung der Anschlusselemente (15, 51) aufweist, deren Abmessungen jeweils wenigstens der Quadratfläche der Breite des Anschlusselements (15, 51) entsprechen.

11. Batteriepack nach einem der vorherigen Ansprüche, wobei die Batteriezellen (11) in den Aufnahmeöffnungen (21) mittels eines Klebstoffes fixiert sind und/oder die Aufnahmeöffnung (21) in ihren Abmessungen an den Außenumfang der aufzunehmenden Batteriezelle (11) angepasst ist und eine Klemmwirkung auf die Batteriezelle (11) ausübt.

12. Verfahren zum Herstellen eines Batteriepacks, umfassend die Schritte:
- Einsetzen von wenigstens zwei Batteriezellen (11) jeweils mit der Seite der elektrisch negativen Anschlusskontakte (34) in eine erste Haltestruktur (12, 13),
- Verbinden einer ersten Anschlussstruktur (14) mit jeweils einem streifenförmigen Anschlusselement (15, 51) pro Batteriezelle (11),
- Auflegen der ersten Anschlussstruktur (14) mit den befestigten Anschlusselementen (15, 51) auf die erste Haltestruktur (12, 13),
- Verbinden der Anschlusselemente (15, 51), die mit der ersten Anschlussstruktur (14) verbunden sind, mit entsprechenden elektrisch negativen Anschlusskontakten (34) der Batteriezellen (11),
- Einsetzen der wenigstens zwei Batteriezellen (11) mit der Seite der elektrisch positiven Anschlusskontakte (33) in eine zweite Haltestruktur (12, 13),
- Verbinden einer zweiten Anschlussstruktur (14) mit jeweils einem streifenförmigen Anschlusselement (15, 51) pro Batteriezelle (11),
- Auflegen der zweiten Anschlussstruktur (14) mit den befestigten Anschlusselementen (15, 51) auf die zweite Haltestruktur (12, 13),
- Verbinden der Anschlusselemente (15, 51), die mit der zweiten Anschlussstruktur (14) verbunden sind, mit entsprechenden elektrisch positiven Anschlusskontakten (33) der Batteriezellen (11),
- wobei die erste und die zweite Haltestruktur (12, 13) jeweils gleich ausgebildet sind, und jede der Haltestrukturen (12, 13) Aufnahmeöffnungen (21) zur Aufnahme jeweils der Stirnseite der Batteriezellen (11) des Batteriepacks aufweist,
- wobei die Anordnung der Aufnahmeöffnungen (21) in der ersten und zweiten Haltestruktur (12, 13) jeweils einen Abstand zwischen den Batteriezellen (11) definiert, um eine ausreichende Belüftung zwischen den einzelnen Batteriezellen des Batteriepacks zu ermöglichen und die Batteriezellen (11) zwischen der ersten und zweiten Haltestruktur (12, 13) freiliegen,
- wobei eine Länge und Breite der ersten und zweiten Anschlussstruktur (14) jeweils im Wesentlichen einer Länge und Breite der ersten und zweiten Haltestruktur (12, 13) entsprechen und
- wobei die erste und zweite Anschlussstruktur (14) als großflächige ebene Struktur ausgebildet sind, die die jeweils äußeren und freiliegenden und sich gegenüberliegenden Oberflächen des Batteriepacks bilden,
- wobei die Anschlusselemente (15, 51) jeweils an einer den Batteriezellen (11) zugewandten Seite der Anschlussstruktur (14) befestigt sind.

## Claims

1. A battery pack, comprising:
- at least two battery cells (11), wherein each battery cell (11) has a positive and a negative electrical connection contact (33, 34), which are arranged on opposite sides of the battery cell (11),
- wherein all electrically positive connection contacts (33) of the battery cells (11) are connected to a first connection structure (14), and all electrically negative connection contacts (34) of the battery cells (11) are connected to a second connection structure (14),
wherein the first connection structure (14) and the second connection structure (14) are arranged on opposite sides of the battery pack (10), and
wherein each connection structure (14) has a current capacity which corresponds to the sum of the individual currents of each connected battery cell (11),
- wherein each battery cell is connected to the first connection structure (14) via at least one strip-shaped connection element (15, 51), respectively, and is connected to the second connection structure (14) via at least one further strip-shaped connection element (15, 51), respectively,
wherein a cross-section of the respective connection element (15, 51) is adjusted to a predetermined maximum current of a battery cell (11),
- wherein a first, electrically non-conductive support structure (12) is arranged on the side of the positive electrical connection contacts (33) and a second, electrically non-conductive support structure (13) is arranged on the side of the negative electrical connection contacts (34),
- wherein each of the first and second support structure (12, 13) are equally formed, and each of the support structures (12, 13) comprises receiving openings (21) for receiving at least a portion of the front side of each battery cell (11) of the battery pack,
- wherein the arrangement of the receiving openings (21) in the first and second support structure (12, 13) is, respectively, defining a distance between the battery cells (11) in order to enable sufficient ventilation between the individual battery cells of the battery pack, and wherein the battery cells (11) between the first and second support structure (12, 13) are exposed,
- wherein a length and width of the first and second connection structure (14) essentially correspond, respectively, to a length and width of the first and second support structure (12, 13) and
- wherein each of the first and second connection structure (14) is shaped as a large, flat structure which form the respective outer and exposed and opposing surfaces of the battery pack,
- wherein the connection elements (15, 51) are each fixed to a side of the connection structure (14) facing the battery cells (11), respectively.

2. The battery pack according to claim 1, wherein the support structure (12, 13) has a surface (24) which is directed towards the connection structure (14), wherein said surface (24) is broken by connection openings (23) and the connection structure (14), in the assembled state, rests on the surface (24) of the support structure (12, 13), and the connection elements (15, 51) penetrate the connection openings (23).

3. The battery pack according to one of claims 1-2, wherein at least one fastener (25) is arranged between the first and second support structure (12, 13) in order to hold the two support structures (12, 13) with the inserted battery cells (11) together, wherein the fastener (25) is formed of electrically non-conductive material or is surrounded by electrically insulating material.

4. The battery pack according to one of the preceding claims 2 or 3, wherein the receiving opening (21) is larger than an associated connection opening (23).

5. The battery pack according to one of the preceding claims 2 to 4, wherein the support structure (12, 13) comprises, respectively, a receiving side for receiving the battery cells (11) and a connection side for an electrical connection of the battery cells (11), wherein the receiving side is opposite the connection side and the connection openings (23) of the support structure (12, 13) are arranged on the connection side.

6. The battery pack according to one of the preceding claims 2 to 5, wherein the connection structure (14) comprises contact openings (16) which are each associated with the connection openings (23) of a support structure (12, 13), and the contact openings (16) of the connection structure (14) each expose the connection openings (23) of the support structure (12, 13) and a corresponding contact region of the positive or negative connection contact (34, 33) of the battery cell (11).

7. The battery pack according to one of the preceding claims, wherein the connection elements (15, 51) are, respectively, fastened to the connection structure (14) by means of a joining method and protrude into the respective contact openings (16).

8. The battery pack according to one of the preceding claims, wherein the connection element (15, 51) has a cross-section which melts at a current above a maximum charge current or discharge current and interrupts the connection between the connection structure (14) and the electrical connection contact (33, 34) of the battery cell (11).

9. The battery pack according to one of the preceding claims, wherein the cross-section of the connection element (15, 51) is configured such that a uniform current distribution is achieved during the charging of the battery cells (11) connected in the battery pack (10).

10. The battery pack according to one of the preceding claims, wherein the connection structure (14) has connection points (52) for, respectively, fixing the connection elements (15, 51) whose dimensions correspond to at least the square surface of the width of the connection element (15, 51), respectively.

11. The battery pack according to one of the preceding claims, wherein the battery cells (11) are fixed in the receiving openings (21) by means of an adhesive and/or the dimensions of the receiving opening (21) are adapted to the outer circumference of the battery cell (11) to be received and the receiving opening (21) exerts a clamping effect on the battery cell (11).

12. A method of manufacturing a battery pack, comprising the steps of:
- inserting at least two battery cells (11) with, respectively, the side of the electrically negative connection contacts (34) into a first support structure (12, 13),
- connecting a first connection structure (14) to one strip-shaped connection element (15, 51) per battery cell (11), respectively,
- placing the first connection structure (14) with the attached connection elements (15, 51) on the first support structure (12, 13),
- connecting the connection elements (15, 51) which are connected to the first connection structure (14), to corresponding, electrically negative connection contacts (34) of the battery cells (11),
- inserting said at least two battery cells (11) with the side of the electrically positive connection contacts (33) into a second support structure (12, 13),
- connecting a second connection structure (14) to one strip-shaped connection element (15, 51) per battery cell (11), respectively,
- placing the second connection structure (14) with the attached connection elements (15, 51) on the second support structure (12, 13),
- connecting the connection elements (15, 51) which are connected to the second connection structure (14), to corresponding, electrically positive connection contacts (33) of the battery cells (11),
wherein the first and the second support structures (12, 13) are equally formed, respectively, and each of the supporting structures (12, 13) has receiving openings (21) for receiving the end face of the battery cells (11) of the battery pack, respectively,
wherein the arrangement of the receiving openings (21) in the first and second support structure (12, 13) is, respectively, defining a distance between the battery cells (11) in order to enable sufficient ventilation between the individual battery cells of the battery pack, and wherein the battery cells (11) between the first and second support structure (12, 13) are exposed,
- wherein a length and width of the first and second connection structure (14) correspond essentially to a length and width of the first and second support structure (12, 13), respectively, and
- wherein the first and second connection structure (14) are shaped as a large, flat structure which form the respective outer and exposed and opposing surfaces of the battery pack,
- wherein the connection elements (15, 51) are each fixed to a side of the connection structure (14) facing the battery cells (11), respectively.

## Revendications

1. Ensemble de batterie comportant :
- au moins deux éléments de batterie (31), dans lequel chaque élément de batterie (11) comporte un contact de raccordement électrique positif et un contact de raccordement électrique négatif (33, 34) qui sont agencés sur des côtés opposés de l'élément de batterie (11),
- dans lequel tous les contacts de raccordement électriquement positifs (33) des éléments de batterie (11) sont reliés à une première structure de raccordement (14) et tous les contacts de raccordement électriquement négatifs (34) des éléments de batterie (11) sont reliés à une seconde structure de raccordement (14),
- dans lequel la première structure de raccordement (14) et la seconde structure de raccordement (14) sont agencées sur des côtés opposés de l'ensemble de batterie (10), et
- dans lequel chaque structure de raccordement (14) a une capacité de charge qui correspond à la somme des courants individuels de chaque élément de batterie (11) raccordé,
- dans lequel chaque élément de batterie est respectivement relié à la première structure de raccordement (14) par l'intermédiaire d'au moins un élément de raccordement en forme de bande (15, 51) et à la seconde structure de raccordement (14) par l'intermédiaire d'au moins un élément de raccordement supplémentaire en forme de bande (15, 51),
- dans lequel une section transversale de l'élément de raccordement (15, 51) respectif est adaptée à un courant maximal prédéfini d'un élément de batterie (11),
- dans lequel une première structure de support électriquement non conductrice (12) est agencée du côté des contacts de raccordement électriquement positifs (33) et une seconde structure de support électriquement non conductrice (13) est agencée du côté des contacts de raccordement électriques négatifs (34),
- dans lequel les première et seconde structures de support (12, 13) sont respectivement formées de façon identique, et chacune des structures de support (12, 13) comporte des ouvertures de réception (21) pour recevoir respectivement la face frontale des éléments de batterie (11) de l'ensemble de batterie,
- dans lequel l'agencement des ouvertures de réception (21) dans les première et seconde structures de support (12, 13) définit respectivement une distance entre les éléments de batterie (11) afin de permettre une ventilation suffisante entre les éléments de batterie individuels de l'ensemble de batterie, et dans lequel les éléments de batterie (11) sont exposés entre les première et seconde structures de support (12, 13),
- dans lequel une longueur et une largeur des première et seconde structures de raccordement (14) correspondent respectivement sensiblement à une longueur et une largeur des première et seconde structures de support (12, 13) et
- dans lequel les première et seconde structures de raccordement (14) sont chacune configurées sous forme de structures planes à grande surface qui forment des surfaces extérieures de l'ensemble de batterie exposées et respectivement opposées,
- dans lequel les éléments de raccordement (15, 51) sont respectivement fixés sur un côté de la structure de raccordement (14) dirigé vers les éléments de batterie (11).

2. Ensemble de batterie selon la revendication 1, dans lequel la structure de support (12, 13) comporte une face (24) qui est dirigée vers la structure de raccordement (14), dans lequel la face (24) est traversée par des ouvertures de raccordement (23) et la structure de raccordement (14) à l'état monté est en appui sur la face (24) de la structure de support (12, 13), et les éléments de raccordement (15, 51) pénètrent dans les ouvertures de raccordement (23).

3. Ensemble de batterie selon l'une des revendications 1 à 2, dans lequel au moins un élément de fixation (25) est agencé entre les première et seconde structures de support (12, 13) afin que les deux structures de support (12, 13) maintiennent ensemble les éléments de batterie (11) insérés, dans lequel l'élément de fixation (25) est constitué d'un matériau électriquement non conducteur ou est entouré d'un matériau électriquement isolant.

4. Ensemble de batterie selon l'une des revendications 2 ou 3 précédentes, dans lequel l'ouverture de réception (21) est plus grande qu'une ouverture de raccordement (23) associée.

5. Ensemble de batterie selon l'une des revendications 2 à 4 précédentes, dans lequel la structure de support (12, 13) comporte respectivement un côté de réception pour recevoir les éléments de batterie (11) et un côté de raccordement pour un raccordement électrique des éléments de batterie (11), dans lequel le côté de réception est opposé au côté de raccordement et les ouvertures de raccordement (23) de la structure de support (12, 13) sont agencées du côté de raccordement.

6. Ensemble de batterie selon l'une des revendications 2 à 5 précédentes, dans lequel la structure de raccordement (14) comporte des ouvertures de contact (16) qui sont respectivement associées aux ouvertures de raccordement (23) d'une structure de support (12, 13) et les ouvertures de contact (16) de la structure de raccordement (14) exposent respectivement les ouvertures de raccordement (23) de la structure de support (12, 13) et une zone de contact correspondante du contact de raccordement positif ou négatif (34, 33) de l'élément de batterie (11).

7. Ensemble de batterie selon l'une des revendications précédentes, dans lequel les éléments de raccordement (15, 51) sont respectivement fixés sur la structure de raccordement (14) au moyen d'un procédé d'assemblage et font saillie dans les ouvertures de contact (16) respectives.

8. Ensemble de batterie selon l'une des revendications précédentes, dans lequel l'élément de raccordement (15, 51) a une section transversale qui fond lorsqu'un courant est supérieur à un courant de charge ou de décharge maximal et interrompt la liaison entre la structure de raccordement (14) et le contact de raccordement électrique (33, 34) de l'élément de batterie (11).

9. Ensemble de batterie selon l'une des revendications précédentes, dans lequel la section transversale de l'élément de raccordement (15, 51) est conçue de sorte qu'une distribution de courant uniforme a lieu lors de la charge des éléments de batterie (11) raccordés dans l'ensemble de batterie (10).

10. Ensemble de batterie selon l'une des revendications précédentes, dans lequel la structure de raccordement (14) comporte des emplacements de raccordement (52) pour la fixation respective des éléments de raccordement (15, 51) dont les dimensions correspondent respectivement au moins à la surface quadratique de la largeur de l'élément de raccordement (15, 51).

11. Ensemble de batterie selon l'une des revendications précédentes, dans lequel les éléments de batterie (11) sont fixés dans les ouvertures de réception (21) au moyen d'un adhésif et/ou les dimensions de l'ouverture de réception (21) sont adaptées à la circonférence extérieure de l'élément de batterie (11) à recevoir et exerce un effet de serrage sur l'élément de batterie (11).

12. Procédé pour fabriquer un ensemble de batterie, comportant les étapes consistant à :
- insérer dans une première structure de support (12, 13) au moins deux éléments de batterie (11) respectivement avec le côté des contacts de raccordement électriquement négatifs (34),
- relier une première structure de raccordement (14) respectivement à un élément de raccordement en forme de bande (15, 51) pour chaque élément de batterie (11),
- placer la première structure de raccordement (14) avec les éléments de raccordement (15, 51) fixés sur la première structure de support (12, 13),
- relier les éléments de raccordement (15, 51) qui sont reliés à la première structure de raccordement (14), aux contacts de raccordement électriquement négatifs (34) correspondants des éléments de batterie (11),
- insérer dans une seconde structure de support (12, 13) les au moins deux éléments de batterie (11) respectivement avec le côté des contacts de raccordement électriquement positifs (33),
- relier une seconde structure de raccordement (14) respectivement à un élément de raccordement en forme de bande (15, 51) pour chaque élément de batterie (11),
- placer la seconde structure de raccordement (14) avec les éléments de raccordement (15, 51) fixés sur la seconde structure de support (12, 13),
- relier les éléments de raccordement (15, 51) qui sont reliés à la seconde structure de raccordement (14), à des contacts de raccordement électriquement positifs (33) correspondants des éléments de batterie (11),
- dans lequel les première et seconde structures de support (12, 13) sont respectivement formées de façon identique, et chacune des structures de support (12, 13) comporte des ouvertures de réception (21) pour recevoir respectivement la face frontale des éléments de batterie (11) de l'ensemble de batterie,
- dans lequel l'agencement des ouvertures de réception (21) dans les première et seconde structures de support (12, 13) définit respectivement une distance entre les éléments de batterie (11) afin de permettre une ventilation suffisante entre les éléments de batterie individuels de l'ensemble de batterie, et d'exposer les éléments de batterie (11) entre les première et seconde structures de support (12, 13),
- dans lequel une longueur et une largeur des première et seconde structures de raccordement (14) correspondent respectivement sensiblement à une longueur et une largeur des première et seconde structures de support (12, 13) et
- dans lequel les première et seconde structures de raccordement (14) sont chacune configurées sous forme de structures planes à grande surface qui forment les surfaces extérieures de l'ensemble de batterie exposées et respectivement opposées,
- dans lequel les éléments de raccordement (15, 51) sont respectivement fixés sur un côté de la structure de raccordement (14) dirigé vers les éléments de batterie (11).
